# EUROPEAN PATENT SPECIFICATION

(11) **EP 3 202 732 B1**
(45) Date of publication and mention of the grant of the patent: **23.10.2024**
(21) Application number: 15846674.8
(22) Date of filing: 30.09.2015
(51) Int. Cl.: B32B 17/10, B60J 1/00

(54) **LAMINATED GLASS INTERMEDIATE FILM AND LAMINATED GLASS**
ZWISCHENFOLIE FÜR VERBUNDGLAS SOWIE VERBUNDGLAS
FILM INTERMÉDIAIRE DE VERRE FEUILLETÉ ET VERRE FEUILLETÉ

(30) Priority: 30.09.2014 JP 2014202345
(43) Date of publication of application: 09.08.2017
(73) Proprietor: Sekisui Chemical Co., Ltd., Osaka-shi, Osaka 530-0047 (JP)
(72) Inventor: HIROTA Etsurou, Koka-shi Shiga 528-8585 (JP); KAWATE Hiroshi, Koka-shi Shiga 528-8585 (JP); KIDO Koji, Koka-shi Shiga 528-8585 (JP); MORI Michiko, Koka-shi Shiga 528-8585 (JP)
(74) Representative: Cabinet Beau de Loménie
(86) International application number: PCT/JP2015/077713
(87) International publication number: WO 2016/052609

(56) References cited:
- WO-A1-2013/051454
- WO-A1-2013/137288
- JP-A- 2007 331 959
- JP-A- 2010 265 161
- JP-A- H11 512 351
- US-A- 5 762 979
- US-A1- 2003 022 015
- US-A1- 2003 214 715
- US-A1- 2014 000 977
- US-A1- 2015 174 862

## Description

### TECHNICAL FIELD

The present invention relates to an interlayer film for laminated glass, which does not protrude from between glass plates during preliminary pressure bonding in production of laminated glass, and a laminated glass including the interlayer film for laminated glass.

### BACKGROUND ART

Laminated glass including two glass plates integrated through an interlayer film for laminated glass containing plasticized polyvinyl butyral is widely used for windshields of vehicles.

Exemplary methods for producing laminated glass include a rubber bag method and a nip roll method (see Patent Literature 1, for example) . In the rubber bag method, an interlayer film for laminated glass drawn out from a roll is cut to an appropriate size and sandwiched between at least two glass plates to give a laminate. The laminate is placed in a rubber bag and vacuum suctioned for removal of air remaining between the glass plates and the interlayer film so as to be preliminary pressure bonded. Then, the laminate is pressurized with heat, for example, in an autoclave for final pressure bonding. In the nip roll method, a laminate including at least two glass plates and an interlayer film for laminated glass interposed between the glass plates is carried by a conveyor through a heating zone to be heated to a certain temperature, and then passed through nip rolls to be pressure bonded under heating, while the glass plates and the interlayer film are squeezed for reduction of air remaining therebetween. The laminate is thus preliminary pressure bonded while air between the interlayer film and the glass plates is reduced. The resulting laminate in a state where air therein is reduced is then subjected to final bonding under a high-temperature and high-pressure condition in an autoclave.

In the rubber bag method or nip roll method, the interlayer film for laminated glass may partially protrude from between two glass plates during preliminary pressure bonding to contaminate glass or the manufacturing equipment or injure workers. Such protrusion of the interlayer film for laminated glass is significant in preliminary pressure bonding of curved windshields for vehicles.

Patent Literature 2 discloses three-layer polyvinyl acetal film structures, with a core layer and skin layers, particularly for use in solar cells. Patent Literature 3 discloses polyvinyl butyral films which are prepared by simultaneous application of multiple liquid layers to a moving carrier substrate. After solvent removal, the polyvinyl butyral films are peeled from the sacrificial carrier substrate. Patent Literature 4 and 5 disclose polyvinyl butyral interlayer films with a sound insulating core layer and two outer protective layers.

### CITATION LIST

### - Patent Literature

Patent Literature 1: JP H08-26789 A
Patent Literature 2: WO 2013/051454
Patent Literature 3: US 2003/0214715
Patent Literature 4: US 2015/0174862
Patent Literature 5: JP 2007/331959

### SUMMARY OF INVENTION

### - Technical Problem

The present invention aims to, in consideration of the state of the art, provide an interlayer film for laminated glass, which does not protrude from between glass plates during preliminary pressure bonding in production of laminated glass, and a laminated glass including the interlayer film for laminated glass.

### - Solution to problem

The present invention, as defined in appended claim 1, relates to an interlayer film for laminated glass, showing an expansion coefficient in a width direction of 10% or less as measured after immersion in hot water at 80°C for 10 minutes. The present invention also relates, as defined in the appended claims, to a method of producing such an interlayer film.

The present invention is specifically described in the following.

The present inventors investigated the cause of protrusion of an interlayer film for laminated glass from between two glass plates during preliminary pressure bonding to find out that shrinkage or expansion of the interlayer film for laminated glass under heating during preliminary pressure bonding causes such protrusion. Specifically, in production of an interlayer film for laminated glass, a resin film obtained by extrusion molding a raw material resin composition from an extruder is wound around a roll. In the case of embossing a surface of the interlayer film for laminated glass, the film is passed through embossing rolls under heating. Through such processes, the interlayer film for laminated glass is held under tension in a machine direction so as to have a stress accumulated therein. In the step of preliminary pressure bonding in production of laminated glass, the interlayer film for laminated glass is heated to about 50°C to 80°C to be softened. To the softened interlayer film for laminated glass is applied a shrinkage force in the machine direction and an expansion force in the width direction due to the accumulated stress, which presumably causes protrusion of the interlayer film for laminated glass from between two glass plates.

The present inventors made further intensive studies to find out that protrusion of an interlayer film for laminated glass from between glass plates during preliminary pressure bonding in production of laminated glass can be prevented in a case where the interlayer film for laminated glass has an expansion coefficient in a width direction of 10% or less as measured after immersion in hot water at 80°C for 10 minutes, thereby completing the present invention.

Here, the temperature of 80°C corresponds to the heating condition for preliminary pressure bonding, and heating in hot water increases the accuracy of the measurement.

The interlayer film for laminated glass of the present invention has an expansion coefficient in a width direction of 10% or less as measured after immersion in hot water at 80°C for 10 minutes. Having such an expansion coefficient, the interlayer film for laminated glass can be prevented from protruding from between glass plates during preliminary pressure bonding in production of laminated glass. The interlayer film for laminated glass has an expansion coefficient in a width direction of preferably 7% or less, more preferably 5% or less.

The machine direction of the interlayer film for laminated glass as used herein means the direction in which a raw material resin composition is extruded from an extruder in production of the interlayer film for laminated glass. The width direction of the interlayer film for laminated glass means the direction orthogonal to the machine direction in the same plane.

The machine direction of the interlayer film for laminated glass can be confirmed, for example, by the following method. Specifically, the interlayer film for laminated glass is stored in a thermostat at 140°C for 30 minutes, and the shrinkage coefficient is measured in the parallel direction and vertical direction of the film. The direction in which the shrinkage coefficient is larger is the machine direction. The machine direction can be confirmed also by the winding direction of a roll of the interlayer film for laminated glass. Since the interlayer film for laminated glass is wound up in the machine direction in production thereof to give a roll, the winding direction of the roll is the same as the machine direction of the film in production of the interlayer film for laminated glass.

The interlayer film for laminated glass of the present invention preferably has a shrinkage coefficient in the machine direction of 15% or less as measured after immersion in hot water at 80°C for 10 minutes. Having such a shrinkage coefficient, the interlayer film for laminated glass can be more surely prevented from protruding from between glass plates during preliminary pressure bonding in production of laminated glass. The interlayer film for laminated glass more preferably has a shrinkage coefficient in the machine direction of 10% or less.

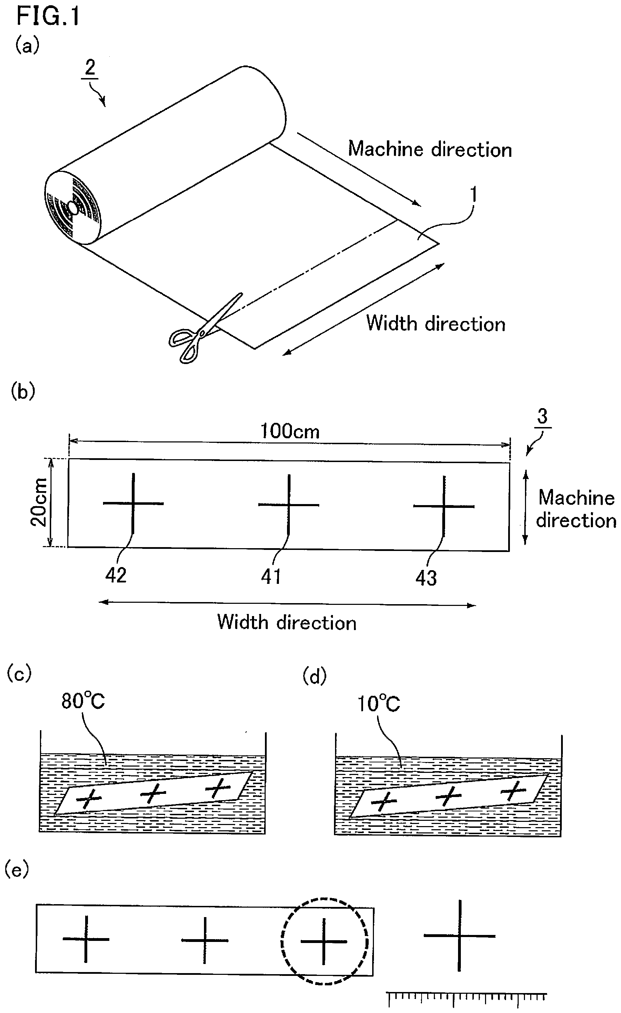

The method of measuring the expansion coefficient in the width direction and the shrinkage coefficient in the machine direction of the interlayer film for laminated glass of the present invention is more specifically described with reference to Fig. 1.

In Fig. 1(a), an interlayer film for laminated glass 1 is drawn out from a roll 2. Here, the drawing direction corresponds to the machine direction of the interlayer film for laminated glass and the direction orthogonal to the machine direction in the same plane corresponds to the width direction.

The drawn interlayer film for laminated glass is cut at 20 cm in the machine direction to give a test sample 3 with a size of 20 cm × film width (normally 100 cm) (Fig. 1(b)). Preferably, the test sample 3 is planarly left to stand at 20°C and 30%RH for 24 hours before the measurement.

After the standing, at least three marker lines are drawn on the test sample 3 at 20°C and 30%RH. In Fig. 1(b), three cross-shaped marker lines 41, 42, and 43 are drawn on the test sample 3. Each marker line consists of 15-cm lines extending in the machine direction and width direction of the interlayer film for laminated glass to form a cross. In Fig. 1(b), the marker line 41 is drawn at a central position both in the machine direction and width direction of the test sample 3. The marker lines 42 and 43 are each drawn at a central portion in the machine direction and at around an end portion in the width direction of the test sample 3. The marker lines 42 and 43 are drawn such that the end of the line in the width direction is at about 10 cm from the end in the width direction of the test sample.

The test sample 3 on which the marker lines are drawn is immersed in hot water at 80°C for 10 minutes (Fig. 1(c)). Preferably, the test sample after immersion in hot water is immediately immersed in water at 20°C or lower for 10 minutes or longer to be cooled (Fig. 1(d)).

The cooled test sample 3 was taken out and water on the surface is lightly wiped off. Then, the length in the machine direction and width direction of the marker lines 41, 42, and 43 was measured. The measurement is preferably performed within 5 minutes from taking out the test sample 3 (Fig. 1(e)).

The expansion coefficient in the width direction and the shrinkage coefficient in the machine direction of the interlayer film for laminated glass can be calculated from the following equations (1) and (2), respectively. The expansion coefficient and shrinkage coefficient are each determined for at least two marker lines and averaged. The obtained average values are taken as the expansion coefficient in the width direction and the shrinkage coefficient in the machine direction. Expansion coefficient in width direction = ((Length after heating - length before heating)/lenght before heating) × 100 Shrinkage coefficient in machine direction = (Length before heating - length after heating)/length before heating) × 100

The interlayer film for laminated glass of the present invention contains a thermoplastic resin.

Examples of the thermoplastic resin include polyvinylidene fluoride, polytetrafluoroethylene, vinylidene fluoride-propylene hexafluoride copolymers, polyethylene trifluoride, acrylonitrile-butadiene-styrene copolymers, polyester, polyether, polyamide, polycarbonate, polyacrylate, polymethacrylate, polyvinyl chloride, polyethylene, polypropylene, polystyrene, polyvinyl acetal, and ethylene-vinyl acetate copolymers. Preferred among these is polyvinyl acetal because it facilitates production of an interlayer film for laminated glass satisfying the expansion coefficient in the width direction and the shrinkage coefficient in the machine direction.

The polyvinyl acetal resin can be prepared, for example, by acetalization of polyvinyl alcohol (PVA) with an aldehyde. The PVA commonly has a degree of saponification within a range of 70 to 99.9 mol%.

The polyvinyl alcohol (PVA) to be used for preparing the polyvinyl acetal resin has a degree of polymerization of preferably 200 or more, more preferably 500 or more, still more preferably 1700 or more, particularly preferably 2000 or more, and preferably 5000 or less, more preferably 4000 or less, still more preferably 3000 or less, furthermore preferably less than 3000, particularly preferably 2800 or less. The polyvinyl acetal resin is preferably a polyvinyl acetal resin prepared by acetalization of PVA having a degree of polymerization that satisfies the above lower limit and upper limit. When the degree of polymerization is equal to or more than the lower limit, a laminated glass to be obtained has higher penetration resistance. When the degree of polymerization is equal to or less than the upper limit, formation of an interlayer film is facilitated.

The degree of polymerization of PVA refers to the average degree of polymerization. The average degree of polymerization can be obtained by the method in conformity with JIS K6726 "Testing methods for polyvinyl alcohol". Commonly, the aldehyde is preferably a C1-C10 aldehyde. Examples of the C1-C10 aldehyde include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. Preferred among these are n-butyraldehyde, n-hexylaldehyde, and n-valeraldehyde, and more preferred is n-butyraldehyde. These aldehydes may be used alone or in combination of two or more thereof.

The polyvinyl acetal resin contained in the interlayer film is preferably polyvinyl butyral resin. The use of the polyvinyl butyral resin further increases the weather resistance or the like properties of the interlayer film relative to a laminated glass member.

The interlayer film for laminated glass of the present invention preferably contains a plasticizer.

Any plasticizer may be used as long as it is commonly used in interlayer films for laminated glass. Examples thereof include organic plasticizers such as monobasic organic acid esters and polybasic organic acid esters, and phosphoric acid plasticizers such as organophosphate compounds and organophosphite compounds.

Examples of the organic plasticizers include triethylene glycol-di-2-ethylhexanoate, triethylene glycol-di-2-ethylbutyrate, triethylene glycol-di-n-heptanoate, tetraethylene glycol-di-2-ethylhexanoate, tetraethylene glycol-di-2-ethylbutyrate, tetraethylene glycol-di-n-heptanoate, diethylene glycol-di-2-ethylhexanoate, diethylene glycol-di-2-ethylbutyrate, and diethylene glycol-di-n-heptanoate. Among these, the interlayer film for laminated glass of the present invention contains preferably triethylene glycol-di-2-ethylhexanoate, triethylene glycol-di-2-ethylbutyrate, or triethylene glycol-di-n-heptanoate, more preferably triethylene glycol-di-2-ethylhexanoate.

In the interlayer film for laminated glass of the present invention, the amount of the plasticizer relative to the amount of the thermoplastic resin is not particularly limited. The amount of the plasticizer based on 100 parts by mass of the thermoplastic resin is preferably 25 parts by mass or more, more preferably 30 parts by mass or more, still more preferably 35 parts by mass or more, and preferably 80 parts by mass or less, more preferably 60 parts by mass or less, still more preferably 50 parts by mass or less. When the amount of the plasticizer is equal to or more than the lower limit, a laminated glass to be obtained has better penetration resistance. When the amount of the plasticizer is equal to or less than the upper limit, an interlayer film to be obtained has higher transparency.

The interlayer film for laminated glass of the present invention preferably contains an adhesion modifier.

As the adhesion modifier, for example, an alkali metal salt or an alkaline earth metal salt is preferably used. Examples of the adhesion modifier include salts such as potassium, sodium, and magnesium salts.

Examples of an acid forming the salts include organic carboxylic acids such as octylic acid, hexylic acid, 2-ethylbutyric acid, butyric acid, acetic acid, and formic acid, and inorganic acids such as hydrochloric acid and nitric acid.

The interlayer film for laminated glass of the present invention may optionally contain additives such as an antioxidant, a light stabilizer, a modified silicon oil as an adhesion modifier, a flame retardant, an antistatic agent, a damp proofing agent, a heat ray reflecting agent, a heat ray absorbing agent, an anti-blocking agent, and a colorant including pigments or dyes.

The interlayer film for laminated glass of the present invention has a multilayer structure including three or more resin layers laminated together.

The interlayer film for laminated glass of the present invention includes, as two or more resin layers mentioned above, a first resin layer and a second resin layer having different characteristics. Such an interlayer film for laminated glass can have various properties which are hardly achieved by a single layer structure.

The interlayer film for laminated glass of the present invention having a multilayer structure is in particular an interlayer film for laminated glass having excellent sound insulation properties (hereafter, also referred to as a "sound insulation interlayer film") which includes the first resin layers as protective layers and the second resin layer as a sound insulation layer interposed between two protective layers with an aim of improving the sound insulation properties.

The sound insulation interlayer film is more specifically described in the following.

In the sound insulation interlayer film, the sound insulation layer provides sound insulation properties. The sound insulation layer contains polyvinyl acetal X and a plasticizer.

The polyvinyl acetal X can be prepared by acetalization of polyvinyl alcohol with an aldehyde. The polyvinyl acetal X is preferably an acetalization product of polyvinyl alcohol. The polyvinyl alcohol is commonly obtained by saponifying polyvinyl acetate.

The lower limit of the degree of polymerization of the polyvinyl alcohol is preferably 200, and the upper limit thereof is preferably 5000. When the polyvinyl alcohol has a degree of polymerization of 200 or more, a sound insulation interlayer film to be obtained can have better penetration resistance. When the polyvinyl alcohol has a degree of polymerization of 5000 or less, formability of a sound insulation layer can be ensured. Concerning the degree of polymerization of the polyvinyl alcohol, the lower limit is more preferably 500 and the upper limit is more preferably 4000.

The lower limit of the carbon number of the aldehyde used for acetalization of the polyvinyl alcohol is preferably 4, and the upper limit thereof is preferably 6. When the aldehyde has a carbon number of 4 or more, a sound insulation interlayer film for laminated glass to be obtained can stably contain a sufficient amount of a plasticizer. As a result, the sound insulation interlayer film can exert excellent sound insulation properties. Moreover, bleeding out of the plasticizer can be prevented. When the aldehyde has a carbon number of 6 or less, synthesis of the polyvinyl acetal X is facilitated, ensuring the productivity.

The C4-C6 aldehyde may be a linear or branched aldehyde, and examples thereof include n-butyraldehyde and n-valeraldehyde.

The upper limit of the hydroxy group content of the polyvinyl acetal X is preferably 30 mol%. When the hydroxy group content of the polyvinyl acetal X is 30 mol% or less, the sound insulation layer can contain a plasticizer in an amount needed for exerting sound insulation properties, and bleeding out of the plasticizer can be prevented. The upper limit of the hydroxy group content of the polyvinyl acetal X is more preferably 28 mol%, still more preferably 26 mol%, particularly preferably 24 mol%, and the lower limit thereof is preferably 10 mol%, more preferably 15 mol%, still more preferably 20 mol%.

The hydroxy group content of the polyvinyl acetal X is a value in percentage of the mole fraction (mol%) obtained by dividing the amount of ethylene groups to which hydroxy groups are bonded by the total amount of ethylene groups of the main chain. The amount of ethylene groups to which hydroxy groups are bonded can be determined by measuring the amount of ethylene groups to which hydroxy groups are bonded in the polyvinyl acetal X by the method in conformity with JIS K6728 "Testing methods for polyvinyl butyral".

The lower limit of the acetal group content of the polyvinyl acetal X is preferably 60 mol%, and the upper limit thereof is preferably 85 mol%. When the polyvinyl acetal X has an acetal group content of 60 mol% or more, the sound insulation layer has higher hydrophobicity and can contain a plasticizer in an amount needed for exerting sound insulation properties. Moreover, bleeding out of the plasticizer and whitening can be prevented. When the polyvinyl acetal X has an acetal group content of 85 mol% or less, synthesis of the polyvinyl acetal X is facilitated, ensuring the productivity. The acetal group content can be obtained by measuring the amount of ethylene groups to which acetal groups are bonded in the polyvinyl acetal X by the method in conformity with JIS K6728 "Testing methods for polyvinyl butyral".

The lower limit of the acetyl group content of the polyvinyl acetal X is 5 mol%, and the upper limit thereof is preferably 30 mol%. When the acetyl group content of the polyvinyl acetal X is 5 mol% or more, the sound insulation layer can contain a plasticizer in an amount needed for exerting sound insulation properties, and bleeding out of the plasticizer can be prevented. When the acetyl group content of the polyvinyl acetal X is 30 mol% or less, the sound insulation layer can have higher hydrophobicity, preventing whitening.

The lower limit of the acetyl group content is preferably 8 mol%, and the upper limit thereof is more preferably 25 mol%, still more preferably 20 mol%. The acetyl group content is a value in percentage of the mole fraction (mol%) obtained by subtracting the amount of ethylene groups to which acetal groups are bonded and the amount of ethylene groups to which hydroxy groups are bonded from the total amount of ethylene groups of the main chain and then dividing the obtained value by the total amount of ethylene groups of the main chain.

The polyvinyl acetal X is preferably a polyvinyl acetal having an acetyl group content of 8 mol% or more or a polyvinyl acetal having an acetyl group content of less than 8 mol% and an acetal group content of 68 mol% or more because the sound insulation layer can readily contain a plasticizer in an amount needed for exerting sound insulation properties.

The lower limit of the plasticizer content of the sound insulation layer based on 100 parts by mass of the polyvinyl acetal X is preferably 45 parts by mass, and the upper limit thereof is preferably 80 parts by mass. When the plasticizer content is 45 parts by mass or more, the sound insulation layer can exert high sound insulation properties. When the plasticizer content is 80 parts by mass or less, reduction in the transparency and adhesiveness of an interlayer film for laminated glass to be obtained due to bleeding out of the plasticizer can be prevented. The lower limit of the plasticizer content is more preferably 50 parts by mass, still more preferably 55 parts by mass, and the upper limit thereof is more preferably 75 parts by mass, still more preferably 70 parts by mass.

The lower limit of the thickness of the sound insulation layer is preferably 50 um. Having a thickness of 50 um or more, the sound insulation layer can exert enough sound insulation properties. The lower limit of the thickness of the sound insulation layer is more preferably 70 µm, still more preferably 80 µm. The upper limit thereof is not particularly limited. In consideration of the thickness as an interlayer film for laminated glass, the upper limit is preferably 150 µm.

The protective layer prevents bleeding out of the plasticizer contained in a large amount in the sound insulation layer to prevent reduction in the adhesiveness between the interlayer film for laminated glass and glass and imparts penetration resistance to the interlayer film for laminated glass.

The protective layer preferably contains, for example, a plasticizer and polyvinyl acetal Y, more preferably a plasticizer and polyvinyl acetal Y having a larger hydroxy group content than polyvinyl acetal X.

The polyvinyl acetal Y can be prepared by acetalization of polyvinyl alcohol with an aldehyde. The polyvinyl acetal Y is preferably an acetalization product of polyvinyl alcohol.

The polyvinyl alcohol is commonly obtained by saponifying polyvinyl acetate. The lower limit of the degree of polymerization of the polyvinyl alcohol is preferably 200, and the upper limit thereof is preferably 5000. When the polyvinyl alcohol has a degree of polymerization of 200 or more, an interlayer film for laminated glass to be obtained can have better penetration resistance. When the polyvinyl alcohol has a degree of polymerization of 5000 or less, formability of a protective layer can be ensured. Concerning the degree of polymerization of the polyvinyl alcohol, the lower limit is more preferably 500 and the upper limit is more preferably 4000.

The lower limit of the carbon number of the aldehyde used for acetalization of the polyvinyl alcohol is preferably 3, and the upper limit thereof is preferably 4. When the aldehyde has a carbon number of 3 or more, an interlayer film for laminated glass to be obtained has higher penetration resistance. When the aldehyde has a carbon number of 4 or less, productivity of the polyvinyl acetal Y is improved.

The C3-C4 aldehyde may be a linear or branched aldehyde, and examples thereof include n-butyraldehyde.

The upper limit of the hydroxy group content of the polyvinyl acetal Y is preferably 33 mol%, and the lower limit thereof is preferably 28 mol%. When the polyvinyl acetal Y has a hydroxy group content of 33 mol% or less, whitening of an interlayer film for laminated glass to be obtained can be prevented. When the polyvinyl acetal Y has a hydroxy group content of 28 mol% or more, an interlayer film for laminated glass to be obtained has higher penetration resistance.

The lower limit of the acetal group content of the polyvinyl acetal Y is preferably 60 mol%, and the upper limit thereof is preferably 80 mol%. When the acetal group content is 60 mol% or more, a protective layer to be obtained can contain a plasticizer in an amount needed for exerting enough penetration resistance. When the acetal group content is 80 mol% or less, the adhesion force between the protective layer and glass can be ensured. The lower limit of the acetal group content is more preferably 65 mol%, and the upper limit thereof is more preferably 69 mol%.

The upper limit of the acetyl group content of the polyvinyl acetal Y is preferably 7 mol%. When the polyvinyl acetal Y has an acetyl group content of 7 mol% or less, a protective layer to be obtained can have higher hydrophobicity, thereby preventing whitening. The upper limit of the acetyl group content is more preferably 2 mol%, and the lower limit thereof is preferably 0.1 mol%. The hydroxy group content, acetal group content, and acetyl group content of the polyvinyl acetal Y can be measured by the same methods as those in the case of the polyvinyl acetal X.

The lower limit of the plasticizer content of the protective layer based on 100 parts by mass of the polyvinyl acetal Y is preferably 20 parts by mass, and the upper limit thereof is preferably 45 parts by mass. When the plasticizer content is 20 parts by mass or more, the penetration resistance can be ensured. When the plasticizer content is 45 parts by mass or less, bleeding out of the plasticizer can be prevented, thereby preventing reduction in the transparency and adhesiveness of an interlayer film for laminated glass to be obtained. The lower limit of the plasticizer content is more preferably 30 parts by mass, still more preferably 35 parts by mass, and the upper limit thereof is more preferably 43 parts by mass, still more preferably 41 parts by mass. For better sound insulation properties of a laminated glass to be obtained, the plasticizer content of the protective layer is preferably smaller than the plasticizer content of the sound insulation layer.

For better sound insulation properties of a laminated glass to be obtained, the hydroxy group content of the polyvinyl acetal Y is preferably larger than the hydroxy group content of the polyvinyl acetal X, more preferably larger by 1 mol% or more, still more preferably larger by 5 mol% or more, particularly preferably larger by 8 mol% or more. Adjustment of the hydroxy group contents of the polyvinyl acetal X and polyvinyl acetal Y enables control of the plasticizer contents of the sound insulation layer and the protective layer, so that the sound insulation layer has a lower glass transition temperature. As a result, a laminated glass to be obtained has higher sound insulation properties.

For still higher sound insulation properties of a laminated glass to be obtained, the plasticizer content (hereafter, also referred to as content X) based on 100 parts by mass of the polyvinyl acetal X in the sound insulation layer is preferably larger than the plasticizer content (hereafter, also referred to as content Y) based on 100 parts by mass of the polyvinyl acetal Y in the protective layer, more preferably larger by 5 parts by mass or more, still more preferably larger by 15 parts by mass or more, particularly preferably larger by 20 parts by mass or more. Adjustment of the content X and content Y lowers the glass transition temperature of the sound insulation layer. As a result, a laminated glass to be obtained has still higher sound insulation properties.

The lower limit of the thickness of the protective layer is preferably 200 um, and the upper limit thereof is preferably 1000 um. When the protective layer has a thickness of 200 um or more, the penetration resistance can be ensured.

The lower limit of the thickness of the protective layer is more preferably 300 um, and the upper limit thereof is more preferably 700 µm.

The interlayer film for laminated glass of the present invention can be produced, for example, by a method of extrusion molding a raw material resin composition using an extruder. Control of the extrusion-molding conditions enables production of an interlayer film for laminated glass satisfying the expansion coefficient in the width direction and the shrinkage coefficient in the machine direction. In the case of embossing a surface of the interlayer film for laminated glass, the interlayer film for laminated glass satisfying the expansion coefficient in the width direction and the shrinkage coefficient in the machine direction is hardly obtained by the method using an embossing roll, and therefore, a lip method in which projections and recesses are formed in accordance with the shape of a die of an extruder is preferably employed.

Specifically, the speed difference between rolls that carry a resin film ejected from the die of the extruder before winding is adjusted to 15% or less. The roll for carrying the resin film ejected from the die first is positioned lower and more forward in the machine direction than the die. In addition, the extrusion amount from the extruder is set to 500 to 800 kg/h, and the speed of the roll that first carries the film is set to 5 to 10 m/min. When the extrusion conditions are controlled as described above, an interlayer film for laminated glass to be obtained satisfies the expansion coefficient in the width direction and the shrinkage coefficient in the machine direction.

A laminated glass including the interlayer film for laminated glass of the present invention between a pair of glass plates is also one aspect of the present invention.

The glass plate may be a commonly used transparent glass plate. Examples thereof include inorganic glass plates such as float glass plates, polished glass plates, figured glass plates, meshed glass plates, wired glass plates, colored glass plates, heat-absorbing glass plates, heat-reflecting glass plates, and green glass plates. An ultraviolet shielding glass plate including an ultraviolet shielding coat layer on a glass surface may also be used. Other examples of the glass plates include organic plastic plates made of polyethylene terephthalate, polycarbonate, or polyacrylate.

The glass plates may include two or more types of glass plates. For example, the laminated glass may be a laminate including the interlayer film for laminated glass of the present invention between a transparent float glass plate and a colored glass plate such as a green glass plate. The glass plates may include two or more glass plates with different thicknesses.

### - Advantageous Effects of Invention

The present invention can provide an interlayer film for laminated glass which does not protrude from between glass plates during preliminary pressure bonding in production of laminated glass, and a laminated glass including the interlayer film for laminated glass.

### BRIEF DESCRIPTION OF DRAWINGS

Fig. 1 is a schematic view explaining a method of measuring the expansion coefficient in the width direction and the shrinkage coefficient in the machine direction of an interlayer film for laminated glass.

### DESCRIPTION OF EMBODIMENTS

Embodiments of the present invention are specifically described in the following with reference to, but not limited to, examples. Examples 1 to 5 below are Reference Examples describing single-layer interlayer films for laminated glass. Examples 6 and 7 are Examples according to the present invention, describing interlayer films for laminated glass having a triple layer structure.

### (Example 1)

To 100 parts by weight of a polyvinyl butyral resin (hydroxy group content: 30 mol%, degree of acetylation: 1 mol%, degree of butyralization: 69 mol%, average degree of polymerization: 1700) were added 40 parts by weight of triethylene glycol-di-2-ethylhexanoate (3GO) as a plasticizer, 0.5 parts by weight of 2-(2'-hydroxy-3'-t-butyl-5-methylphenyl)-5-chlorobenzotriazole ("Tinuvin 326" produced by Basf SE) as an ultraviolet light shielding agent, and 0.5 parts by weight of 2,6-di-t-butyl-p-cresol (BHT) as an antioxidant, and kneaded with a mixing roll sufficiently to give a resin composition.

The obtained resin composition was extruded from an extruder to give a single-layer interlayer film for laminated glass having a width of 100 cm and a thickness of 770 µm. The interlayer film was wound into a roll. At this time, a lip die with a lip interval of 1.0 mm was used. The speed difference between rolls for carrying the resin film ejected from the lip die before winding was adjusted to 15% or less. The roll for carrying the resin film ejected from the die first was positioned lower and more forward in the machine direction than the die. The extrusion amount from the extruder was set to 700 kg/h and the speed of the roll for carrying the resin film first was set to 7 m/min.

### (Examples 2 to 5, Comparative Examples 1 to 3)

An interlayer film for laminated glass was produced as in Example 1, except that the extrusion conditions, the speed difference between rolls for carrying a resin film ejected from the lip die before winding, and the speed of the roll for carrying the resin film first were changed.

### (Example 6)

### (Preparation of resin composition for protective layers)

To 100 parts by weight of a polyvinyl butyral resin (hydroxy group content: 30 mol%, degree of acetylation: 1 mol%, degree of butyralization: 69 mol%, average degree of polymerization: 1700) were added 40 parts by weight of triethylene glycol-di-2-ethylhexanoate (3GO) as a plasticizer, 0.5 parts by weight of 2-(2'-hydroxy-3'-t-butyl-5-methylphenyl)-5-chlorobenzotriazole ("Tinuvin 326" produced by Basf SE) as an ultraviolet light shielding agent, and 0.5 parts by weight of 2,6-di-t-butyl-p-cresol (BHT) as an antioxidant, and kneaded with a mixing roll sufficiently to give a resin composition for protective layers.

### (Preparation of resin composition for sound insulation layers)

To 100 parts by weight of a polyvinyl butyral resin (hydroxy group content: 23 mol%, degree of acetylation: 12 mol%, degree of butyralization: 65 mol%, average degree of polymerization: 2300) were added 60 parts by weight of triethylene glycol-di-2-ethylhexanoate (3GO) as a plasticizer, and kneaded with a mixing roll sufficiently to give a resin composition for sound insulation layers.

### (Production of interlayer film for laminated glass)

The resin composition for sound insulation layers and the resin composition for protective layers were co-extruded to form an interlayer film for laminated glass having a triple layer structure including a protective layer (thickness: 355 µm), a sound insulation layer (thickness: 100 µm), and a protective layer (thickness: 356 µm) stacked in said order in the thickness direction. The formed interlayer film for laminated glass was wound into a roll. At this time, a lip die with a lip interval of 1.0 mm was used. The speed difference between rolls for carrying the resin film ejected from the lip die before winding was adjusted to 15% or less. The roll for carrying the resin film ejected from the die first was positioned lower and more forward in the machine direction than the die. The extrusion amount from the extruder was set to 700 kg/h and the speed of the roll for carrying the resin film first was set to 7 m/min.

### (Example 7)

An interlayer film for laminated glass was produced as in Example 6, except that the structure of the interlayer film for laminated glass was changed to a triple layer structure including a protective layer (thickness: 350 µm), a sound insulation layer (thickness: 100 µm), and a protective layer (thickness: 350 µm) in said order in the thickness direction, and the extrusion conditions, the speed difference between rolls for carrying the resin film ejected from the lip die before winding, and the speed of the roll for carrying the resin film first were changed.

### (Evaluation)

The interlayer films for laminated glass obtained in the examples and comparative examples were evaluated by the following methods.

Table 1 shows the results.

### (1) Evaluation of expansion coefficient and shrinkage coefficient of interlayer film for laminated glass after immersion in hot water at 80°C

Based on the method illustrated in Fig. 1, the expansion coefficient and the shrinkage coefficient of the interlayer film for laminated glass after immersion in hot water at 80°C were measured. Specifically, the interlayer film for laminated glass was drawn out from a roll and cut at 20 cm in the machine direction to give a test sample with a size of 20 cm × 100 cm. The obtained test sample was planarly left to stand at 20°C and 30%RH or less for 24 hours. When the interlayer film for laminated glass was immersed in hot water at 80°C, the interlayer film was sunk in a water bath in such a manner that creases were less likely to be formed upon immersion thereof.

Then, cross-shaped marker lines (length of each line: 15 cm) were drawn at three positions (central position in the machine direction, positions at 10 cm from either end in the width direction) on the test sample.

The test sample on which the marker lines were drawn was immersed in hot water at 80°C for 10 minutes, and then in water at 20°C or lower for 10 minutes or longer to be cooled. The cooled test sample was taken out and water on the surface was soon lightly wiped off. Within five minutes, the length in the machine direction and width direction of each marker line was measured.

The expansion coefficient in the width direction and the shrinkage coefficient in the machine direction of the interlayer film for laminated glass were calculated by the above mentioned equations (1) and (2), respectively. Specifically the expansion coefficient and the shrinkage coefficient were each determined for three marker lines and averaged, and the resulting values were taken as the expansion coefficient in the width direction and the shrinkage coefficient in the machine direction.

### (2) Evaluation of protrusion amount of interlayer film for laminated glass upon preliminary pressure bonding

The interlayer film for laminated glass (25 cm × 25 cm) after standing at 23°C and 30%RH for 24 hours was interposed between two Teflon^{®}-coated sheets (thickness: 3 mm, size: 25 cm × 25 cm) to form a laminate. The laminate was carried by a conveyor through a heating zone in such a manner that the temperature of the laminate reached 55°C right after the heating zone is over. After the temperature of the laminate reached that temperature, the laminate was soon immersed in water at 20°C or less within 10 seconds and held for 10 minutes or longer to be cooled. After the cooling, the interlayer film was taken out and the surface thereof was wiped. The resulting interlayer film was left standing at 23°C and 30%RH for 24 hours.

On the interlayer film for laminated glass before being stacked, marker lines were drawn in the width direction at positions of 5 cm and 20 cm from the leading end in the machine direction of the interlayer film which was headed for the heating zone. The length of the marker line before the stacking and that after the test were compared, and the protrusion amount was calculated using the following equation (3).

The protrusion amount at the 5-cm position and the protrusion amount at the 20-cm position were averaged, and the obtained average value was taken as the protrusion amount of the interlayer film for laminated glass upon preliminary pressure bonding. Protrusion amount (%) = [(Length of marker line after heating test - length of marker line before heating test) / length of marker line before heating test]] × 100

In a case where the protrusion amount of the interlayer film for laminated glass upon preliminary pressure bonding is less than 1.5%, there is no fear of contamination of glass or the manufacturing equipment and of injury to workers. The case where the protrusion amount of the interlayer film for laminated glass upon preliminary pressure bonding was less than 1.5% was rated "Good (o)", while the case where the protrusion amount was 1.5% or more was rated "Poor (×)".

**[Table 1]**

| | Film thickness (before heating) (*µ*m) | Structure | Evaluation after immersion in hot water at 80°C | | Protrusion amount after preliminary pressure bonding | |
|---|---|---|---|---|---|---|
| | | | Expansion coefficient in width direction (%) | Shrinkage coefficient in machine direction (%) | Percentage relative to film width (%) | Evaluation |
| Example 1 | 770 | Single layer | 10.0 | 16.6 | 1.32 | ○ |
| Example 2 | 805 | Single layer | 8.0 | 14.7 | 0.97 | ○ |
| Example 3 | 762 | Single layer | 5.1 | 11.0 | 0.56 | ○ |
| Example 4 | 820 | Single layer | 2.8 | 9.5 | 0.28 | ○ |
| Example 5 | 784 | Single layer | 9.8 | 23.4 | 1.22 | ○ |
| Example 6 | 811 | Triple layer | 10.0 | 15.8 | 1.28 | ○ |
| Example 7 | 800 | Triple layer | 5.5 | 8.9 | 0.61 | ○ |
| Comparative Example 1 | 763 | Single layer | 12.3 | 18.8 | 1.53 | × |
| Comparative Example 2 | 775 | Single layer | 16.1 | 22.7 | 2.08 | × |
| Comparative Example 3 | 771 | Single layer | 20.0 | 27.1 | 2.63 | × |

### INDUSTRIAL APPLICABILITY

The present invention can provide an interlayer film for laminated glass, which does not protrude from between glass plates during preliminary pressure bonding in production of laminated glass, and a laminated glass including the interlayer film for laminated glass.

### REFERENCE SIGNS LIST

- 1:: Interlayer film for laminated glass
- 2:: Roll
- 3:: Test sample
- 41, 42, 43:: Marker line

## Claims

1. An interlayer film for laminated glass, showing an expansion coefficient in a width direction of 10% or less as measured after immersion in hot water at 80°C for 10 minutes,
and wherein the interlayer film for laminated glass has a multilayer structure including a sound insulation layer interposed between two protective layers, wherein the sound insulation layer contains a polyvinyl acetal and a plasticizer, wherein the polyvinyl acetal has an acetyl group content of 5 mol% or more.

2. The interlayer film for laminated glass according to claim 1, showing a shrinkage coefficient in a machine direction of 15% or less as measured after immersion in hot water at 80°C for 10 minutes.

3. A laminated glass comprising:
a pair of glass plates; and
the interlayer film for laminated glass according to claim 1 or 2 interposed between the pair of glass plates.

4. A method of producing an interlayer film for laminated glass according to claim 1 or 2, by a method of extrusion molding a raw material resin composition using an extruder,
wherein the extrusion amount from the extruder is set to 500 to 800 kg/h,
wherein the speed of the roll that first carries the film is set to 5 to 10 m/min,
wherein the speed difference between rolls that carry a resin film ejected from the die of the extruder before winding is adjusted to 15% or less, and
wherein the roll for carrying the resin film ejected from the die first is positioned lower and more forward in the machine direction than the die.

5. A method according to claim 4, wherein a lip method is employed in which projections and recesses are formed in accordance with the shape of a die of the extruder.

## Patentansprüche

1. Zwischenfolie für Verbundglas, die einen Ausdehnungskoeffizienten in einer Breitenrichtung von 10 % oder weniger aufweist, gemessen nach Eintauchen in heißes Wasser bei 80 °C über 10 Minuten,
und wobei die Zwischenfolie für Verbundglas eine mehrschichtige Struktur aufweist, die eine zwischen zwei Schutzschichten eingefügte Schalldämmschicht beinhaltet, wobei die Schalldämmschicht ein Polyvinylacetal und einen Weichmacher enthält, wobei das Polyvinylacetal einen Acetylgruppengehalt von 5 Mol-% oder mehr aufweist.

2. Zwischenfolie für Verbundglas nach Anspruch 1, die einen Schrumpfungskoeffizienten in Maschinenrichtung von 15 % oder weniger aufweist, gemessen nach Eintauchen in heißes Wasser bei 80 °C über 10 Minuten.

3. Verbundglas, umfassend:
ein Paar Glasplatten; und
die Zwischenfolie für Verbundglas nach Anspruch 1 oder 2, die zwischen das Paar Glasplatten eingefügt ist.

4. Verfahren zum Herstellen einer Zwischenfolie für Verbundglas nach Anspruch 1 oder 2 durch ein Verfahren zum Extrusionsformen einer Rohmaterial-Harzzusammensetzung unter Verwendung eines Extruders,
wobei die Extrusionsmenge aus dem Extruder auf 500 bis 800 kg/Std. eingestellt ist,
wobei die Geschwindigkeit der Rolle, die die Folie zuerst trägt, auf 5 bis 10 m/Min. eingestellt ist,
wobei der Geschwindigkeitsunterschied zwischen den Rollen, die eine aus der Düse des Extruders vor dem Aufwickeln ausgestoßene Harzfolie tragen, auf 15 % oder weniger eingestellt ist, und
wobei die Rolle, die den aus der Düse ausgestoßenen Harzfolie trägt, zunächst niedriger und in der Maschinenrichtung weiter vorne angeordnet ist als die Düse.

5. Verfahren nach Anspruch 4, wobei ein Lippenverfahren angewendet wird, bei dem Vorsprünge und Aussparungen entsprechend der Form einer Düse des Extruders geformt werden.

## Revendications

1. Film intercalaire pour verre feuilleté, présentant un coefficient de dilatation dans le sens de la largeur inférieur ou égal à 10 % tel que mesuré après immersion dans de l'eau chaude à 80 °C pendant 10 minutes,
et le film intercalaire pour verre feuilleté ayant une structure multicouche comprenant une couche d'isolation acoustique interposée entre deux couches protectrices, dans lequel la couche d'isolation acoustique contient un polyacétal de vinyle et un plastifiant, dans lequel le polyacétal de vinyle a une teneur en groupe acétyle supérieure ou égale à 5 % en moles.

2. Film intercalaire pour verre feuilleté selon la revendication 1, présentant un coefficient de retrait dans le sens machine inférieur ou égal à 15 % tel que mesuré après immersion dans de l'eau chaude à 80 °C pendant 10 minutes.

3. Verre feuilleté comprenant :
une paire de plaques de verre ; et
le film intercalaire pour verre feuilleté selon la revendication 1 ou 2 interposé entre la paire de plaques de verre.

4. Procédé de production d'un film intercalaire pour verre feuilleté selon la revendication 1 ou 2, par un procédé de moulage par extrusion d'une composition de résine de matière première à l'aide d'une extrudeuse,
dans lequel la quantité d'extrusion provenant de l'extrudeuse est réglée à 500 à 800 kg/h,
dans lequel la vitesse du rouleau qui porte en premier le film est réglée à 5 à 10 m/min,
dans lequel la différence de vitesse entre les rouleaux qui transportent un film de résine éjecté depuis la filière de l'extrudeuse avant l'enroulement est réglée à au plus 15 %, et
dans lequel le rouleau destiné à transporter le film de résine éjecté depuis la matrice en premier est positionné plus bas et plus en avant dans le sens machine que la filière.

5. Procédé selon la revendication 4, dans lequel un procédé de lèvre est utilisé dans lequel des saillies et des évidements sont formés conformément à la forme d'une filière de l'extrudeuse.
